# EUROPEAN PATENT SPECIFICATION

(11) **EP 2 675 967 B1**
(45) Date of publication and mention of the grant of the patent: **13.04.2016**
(21) Application number: 12703562.4
(22) Date of filing: 14.02.2012
(51) Int. Cl.: E04G 21/04, F16K 15/02

(54) **AUTOMATIC CONNECTION VALVE FOR CONCRETE PUMPING**
AUTOMATISCHES ANSCHLUSSVENTIL FÜR BETONPUMPEN
VANNE DE RACCORD AUTOMATIQUE POUR LE POMPAGE DE BÉTON

(30) Priority: 15.02.2011 EP 11154595
(43) Date of publication of application: 25.12.2013
(73) Proprietor: Universiteit Gent, 9000 Gent (BE)
(72) Inventor: VERHOEVEN, Ronny, B-9070 Destelbergen (BE); DE SCHUTTER, Geert, B-9420 Erpe-Mere (BE); ANTEUNIS, Marcel, B-7880 Flobecq (BE)
(74) Representative: Wauters, Davy Erik Angelo
(86) International application number: PCT/EP2012/052532
(87) International publication number: WO 2012/110526

(56) References cited:
- EP-A1- 2 309 160
- DE-A1- 1 534 939
- JP-A- 2007 191 999
- US-A1- 2008 110 330

## Description

### Field of the invention

This invention generally relates to the construction of concrete structures. More particularly, the present invention relates to an automatic valve for concrete pumping in formwork, to a device for pumping concrete into a formwork comprising such a valve and to a corresponding method for pumping concrete into a formwork using such a valve.

### Background of the invention

Concrete structural members, for examples concrete walls, columns or slabs, are generally fabricated by casting concrete into formworks. The casting process is traditionally executed from the top of open formworks, using special procedures and measures to minimize the possible negative influence of the concrete casting operation on the concrete properties and appearance. One example of such a special procedure is vibrating the concrete for compacting it. Advancement in concrete technology and novel technical challenges have led to the development of self-compacting concrete (SCC), which, in contrast to traditional concrete mixtures, does not need vibration energy to be compacted and can be pumped under pressure into the formwork. The formwork is then provided with a concrete receiving opening located in the bottom area, and receives concrete from a pumping pipe which is connected in a fixed way to the concrete receiving opening. Filling of the formwork with concrete thus can be done under pressure from the bottom of the formwork. When the concrete pumping process is terminated, the pumping pipe can be removed. However, removal of the pumping pipe is difficult, as back flow of the concrete out of the formwork has to be avoided. Furthermore, often clearly visible spots are left behind on the hardened surface of the concrete structure.

In the past, connection shutters have been developed which allow to close the concrete receiving opening in the formwork when the pumping process is terminated. However, the available shutters often require a complex installation procedure and need lots of handling both for installing the connection shutter as well as for shutting the pumping opening in the formwork so that the pumping pipe can be fully disconnected. Moreover, when the concrete has hardened, the concrete surface often bears visible marks of the shutter, caused by an imperfect alignment of the sealing surface of the shutter with the inner wall of the formwork side panel.

One example of a connector for filling concrete formworks with a shutter is described in US 2008/0110330 A1. The connector includes a piston tube and a filling port tube interconnected with each other and extending at an acute angle with respect to each other. The piston tube is mounted on the formwork or on a flange mountable on the formwork. A stopper piston axially movable in the piston tube is provided and may be controlled using a spindle so that a substantially flush seal on an inside surface of the formwork element is obtained. By moving the axially moveable piston, the passage between the filling port tube and the piston tube also may be closed off. A number of handling and control steps are required for inducing the flush seal of the concrete formwork once it has been filled with concrete.

Another system for assisting in filling a formwork with concrete is described in DE1534939. The system comprises a pipe portion with a throughput opening for receiving concrete to be pumped into the formwork. It has fixing means for securing the pipe portion to the formwork and a valve for controlling of concrete passing through the pipe portion into the formwork. The valve comprises a flexible flap mechanically connected to a closing body and adapted for controlling a position of the closing body relative to the pipe portion. Although such a flexible flap allows closing of the valve, the finishing obtained with the valve is not flush.

### Summary of the invention

It is an object of embodiments of the present invention to provide good automatic valves and devices and methods using such valves for filling concrete formworks. It is an advantage of embodiments according to the present invention that devices and methods for filling concrete formworks with self compacting concrete are provided that require little handling steps while inducing a substantially flush seal.

It is an advantage of embodiments according to the present invention that devices and methods are provided that allow for automated closing when the filling of the concrete formwork has stopped. It is an advantage of embodiments according to the present invention that such automated closing may be obtained using a valve. It is an advantage of embodiments according to the present invention that such automated closing still allows for obtaining a substantially flush seal.

It is an advantage of embodiments according to the present invention that devices and methods are provided that allow for automated closing when the filling of a concrete formwork has ended and that are little or not prone to blocking during operation.

It is an advantage of embodiments according to the present invention that devices and methods are provided that allow for automated closing when the filling of a concrete formwork has ended and that allow for appropriate, e.g. fluent, flow of the concrete into the formworks. It is an advantage of embodiments according to the present invention that devices and methods are provided that allow for little or no separation between components of the concrete during pumping.

It is an advantage of embodiments according to the present invention that devices and methods for filling concrete formworks providing one or more advantages as described above are obtained which are suitable for filling the concrete formworks by pumping self compacting concrete from a bottom or side of formworks.

The above objective is accomplished by a method and device according to the present invention.

The present invention relates to a device for assisting in filling a formwork with concrete, the device comprising a pipe portion with a throughput opening for receiving concrete to be pumped into the formwork, fixing means for securing the pipe portion to the formwork and a valve for controlling flow of concrete passing through the pipe portion into the formwork, the valve comprising a closing body and a resilient means mechanically connected to the closing body and adapted for controlling a position of the closing body relative to the pipe portion so as to provide an opening between the closing body and the pipe portion during pumping of the concrete to provide an open state of the valve and so as to position the closing body in the pipe portion for interrupting the concrete flow upon absence of an overpressure of concrete from the pipe portion towards the formwork to provide a closed state of the valve, the closing body having a first surface facing the formwork and a second surface facing the throughput opening of the pipe portion. The valve furthermore is adapted in that, when the valve is in closed state, the first surface of the valve lies in plane with a wall of the formwork so as to provide a substantially flush surface of the concrete in the formwork. It is an advantage of embodiments according to the present invention that the valve automatically opens when the concreting operation starts, allowing concrete to flow into the formwork, and automatically closes when the pumping process is terminated, obstructing concrete that was pumped into the formwork to escape back into the pipe portion. It is an advantage of embodiments of the present invention that a nice finishing is obtained for the concrete in the formwork, without the need for extensive user manipulation of the valve.

It is an advantage of embodiments according to the present invention that the visual appearance of the closing body, i.e. of the position where the concrete was pumped, on the hardened concrete surface is minimized, without the need for post processing.

The resilient means may be a spring.

The resilient means is at least partly and optionally fully shielded from concrete by the closing body or by a separate shielding such that the working of the resilient means is not disturbed by the concrete flow. It is an advantage of embodiments according to the present invention that the resilient means can be covered from the concrete flow by the closing body such that the working of the resilient means is not disturbed by the concrete flow. The resilient means may be positioned in a void space of the closing body. Alternatively, the closing body and the resilient means may be positioned outside the closing body. A separate shielding for the resilient means may be applied.

The second surface of the closing body may be shaped for guiding concrete towards the opening between the pipe portion and the closing body when the valve is in open state. It is an advantage of embodiments according to the present invention that by adapting the shape of the closing body, an efficient filling of the formwork as well as a uniform spreading of the concrete flow poured into the formwork can be obtained.

The second surface of the closing body or at least part thereof may have a concave shape.

The second surface of the closing body or at least part thereof may have any of a substantially conical shape or bell shape.

The closing body may have a cylindrical shape. It is an advantage of embodiments according to the present invention that valves can be easily manufactured.

The resilient means may be positioned in the pipe portion. It is an advantage of embodiments according to the present invention that both the pipe portion and the closing body as well as the resilient means can be recuperated after removal of the formwork.

The resilient means may be located outside the pipe portion and adapted for remaining in the concrete structure after it is hardened.

The resilient means may be fabricated from a non-metallic or non-corroding material in order to avoid corrosion induced damage to the concreted structure.

In at least some embodiments of the present invention, the second surface of the closing body facing the throughput opening of the pipe portion may have a peripheral area portion being closest to an inner wall of the pipe portion, whereby each angle between the peripheral area portion of the second surface and an inner wall of the pipe portion is at least 45°. In one embodiment, each angle may be between 45° and 90°.

The peripheral area portion of the second surface, facing the throughput opening of the pipe portion and for which each angle between the inner wall of the pipe portion and the peripheral area portion of the second surface is at least 45°, may extend over at least 5mm in a direction away from the inner wall of the pipe portion. The peripheral area portion of the second surface oriented as described above with reference to the inner wall of the pipe portion, may fulfill this condition along substantially its full periphery and over an area extending at least 5mm, for example at least 7mm or for example at least 10mm or for example at least 12 mm in the direction away from the inner wall of the pipe portion.

In at least some embodiments of the present invention, the second surface facing the throughput opening of the pipe portion may have a peripheral area wherein an edge feature is provided in the peripheral area, such as for example an edge feature extending towards the throughput opening of the pipe portion or in other words extending in a direction away from the formwork, when the valve is in position. Such an edge feature may be for example an additional ring shaped portion present at the edge of the second surface. The ring shaped portion may have a flat surface, i.e. a surface parallel with the first surface of the closing body. The surface of the ring shaped portion thus may have a surface making an angle of 90° with respect to the inner wall of the pipe portion. Alternatively, the surface of the ring shaped portion may be inclined with respect to the first surface of the closing body. The surface of the edge feature facing the throughput opening of the pipe portion may fulfill the requirement that each angle between this surface of the peripheral area portion and an inner wall of the pipe portion is at least 45°, e.g. between 45° and 180°. In one embodiment, each angle may be between 45° and 90°.

Also when the peripheral area has an edge feature, such a peripheral area portion may extend over at least 5mm in a direction away from the inner wall of the pipe portion. The peripheral area portion of the second surface or the surface of the edge feature oriented as described above with reference to the inner wall of the pipe portion, may extend along substantially the full periphery of the closing body and over an area extending at least 5mm, for example at least 7mm or for example at least 10mm or for example at least 12 mm in the direction away from the inner wall of the pipe portion.

It is an advantage of some embodiments according to the present invention that the shape of the closing body is profiled such that the closing process of the valve is not substantially disturbed by e.g. aggregate particles becoming jammed between the closing body and the inner wall of the pipe portion. It is an advantage of embodiments to the present invention that a device with a valve is provided which can be easily coupled to the formwork and allows for an easy uncoupling of the pumping pipe after the pumping operation.

The present invention also relates to a method for controlled pumping of concrete into formwork, the method comprising coupling a pipe portion to formwork to be filled with concrete, receiving concrete through said pipe portion and automatically opening a valve upon receipt of concrete in the pipe portion using overpressure of the concrete from the pipe portion towards the formwork, guiding the concrete through the valve into a concrete receiving region of the formwork, and automatically closing the valve when the concrete pumping process is terminated due to absence of overpressure of the concrete from the pipe portion towards the formwork, whereby automatically closing the valve comprises moving a closing body of the valve relative with respect to the pipe portion so that a first surface of the closing body lies in plane with a wall of the formwork so as to provide a substantially flush surface of the concrete in the formwork..

Automatically opening a valve may comprise moving a closing body relative with respect to a pipe portion so as to provide an opening between the closing body and the pipe portion.

Automatically closing the valve may comprise preventing aggregates from blocking the closing of the valve by using a closing body having a first surface facing the formwork and a second surface facing a throughput opening of the pipe portion, wherein the second surface is profiled such that the closing process of the valve is not substantially disturbed by e.g. aggregate particles becoming jammed between the closing body and the inner wall of the pipe portion.

The second surface may comprise a peripheral area portion being closest to the inner wall of the pipe portion, wherein each angle between the peripheral area portion of the second surface and the inner wall of the pipe portion is at least 45°. Each angle may be between 45° and 90°. Alternatively or in addition thereto, the peripheral area portion comprises an edge feature, such as for example an edge feature extending towards the throughput opening of the pipe portion or in other words extending in a direction away from the formwork. Such an edge feature may for example be a ring shaped portion present at the edge of the second surface. The ring shaped portion may have a flat surface, i.e. a surface parallel with the first surface of the closing body. The surface of the ring shaped portion thus may have a surface making an angle of 90° with respect to the inner wall of the pipe portion. Alternatively, the surface of the ring shaped portion may be inclined with respect to the first surface of the closing body. Also in case an edge feature is present, the peripheral area portion may fulfill the requirement that each angle between a surface of the peripheral area portion and an inner wall of the pipe portion is at least 45°, e.g. between 45° and 180°. In one embodiment, each angle may be between 45° and 90°.

It is an advantage that proper operation and little or no failure of the system and valve can be obtained.

Guiding the concrete through the valve may comprise guiding concrete towards the opening between the pipe portion and the closing body when the valve is in open state using a particularly shaped surface of the closing body.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

### Brief description of the drawings

FIG. 1 is a cross-sectional 3D view illustrating an overview of a valve according to embodiments of the present invention.
FIG. 2(a) is a cross-sectional 3D view of a valve according to a first embodiment of the present invention.
FIG. 2(b) is a 2D view of a valve according to a first embodiment of the present invention.
FIG. 3 is a 3D view of a valve according to a first embodiment of the present invention, illustrating the valve in an opened configuration.
FIG. 4 is an enlarged view of the top right part of FIG. 2(b), illustrating the profiling of the edge of the closing body.
FIG. 5 schematically illustrates different shapes (a to f) of the closing body, according to embodiments of the present invention.
FIG. 6 (a to c) schematically illustrates different shapes of a closing body comprising an edge feature extending away from the formwork when the device is mounted, according to embodiments of the present invention.
FIG. 7 illustrates an alternative embodiment of a valve according to the present invention, where the closing body and the resilient means are two physically separate entities and where the resilient means is located in the concrete receiving region of the formwork.

The drawings are only schematic and are non-limiting. In the drawings, the size of some of the elements may be exaggerated and not drawn on scale for illustrative purposes.

Any reference signs in the claims shall not be construed as limiting the scope. In the different drawings, the same reference signs refer to the same or analogous elements.

### Detailed description of illustrative embodiments

In the following detailed description, specific details are set forth in order to provide a thorough understanding of the invention and how it may be practiced in particular embodiments. However it will be understood that the present invention may be practiced without these specific details. In other instances, well-known methods, procedures and techniques have not been described in detail, so as not to obscure the present invention. While the present invention will be described with respect to particular embodiments and with reference to certain drawings, the reference is not limited hereto. The drawings included and described herein are schematic and are not limiting the scope of the invention. It is also noted that in the drawings, the size of some elements may be exaggerated and, therefore, not drawn to scale for illustrative purposes.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be understood that the terms used in embodiments of the invention described herein are capable of operation in other orientations than described or illustrated herein.

It is to be understood that the term "comprising" should not be interpreted as being restricted to the steps or elements listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B.

Where in embodiments of the present invention reference is made to formwork, reference is made to an encasing suitable for being filled with concrete and for optionally being removed afterwards, in order to obtain, after hardening of the concrete, a concrete structure of a particular shape.

Where in embodiments of the present invention reference is made to a closed state of a valve, reference is made to a state in which no concrete can flow to the formwork. Where in embodiments of the present invention reference is made to an open state of a valve, reference is made to a state in which concrete can flow from the pipe portion to the formwork.

Where in embodiments of the present reference is made to each angle between a surface of a closing body and the inner wall of a pipe portion for an area of the surface, reference is made to each angle defined between a direction in a point of the area of the surface and tangent to the surface of the closing body on the one hand and a direction tangent to the inner wall of the pipe portion on the other hand.

Where in embodiments of the present invention, reference is made to a surface of the closing body facing the throughput opening of the pipe portion, reference is made to a surface of the closing body not facing the formwork and not parallel to the inner wall of the pipe portion. Such a surface of the closing body facing the throughput opening of the pipe portion typically is the surface of the closing body that is hit by the concrete when the pumping of concrete is initiated through the pipe portion. It may be a continuous surface or may comprise one or more discontinuities. It may be an ensemble of continuous surfaces.

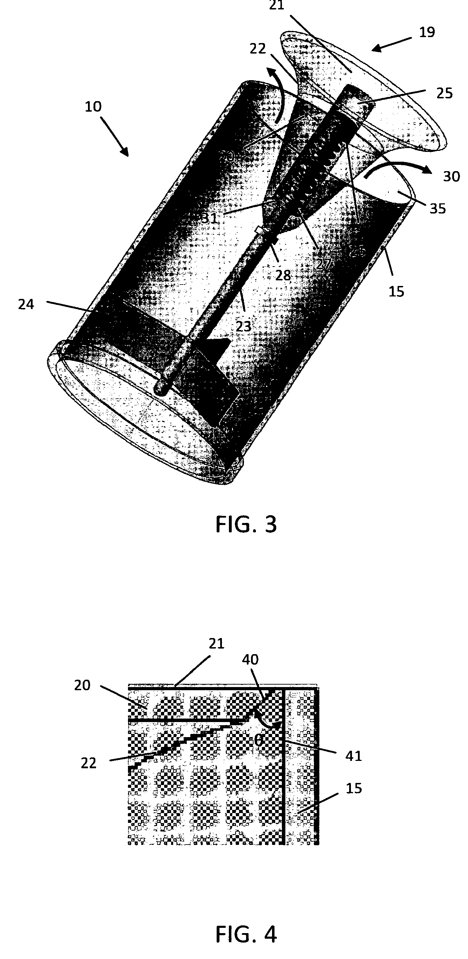

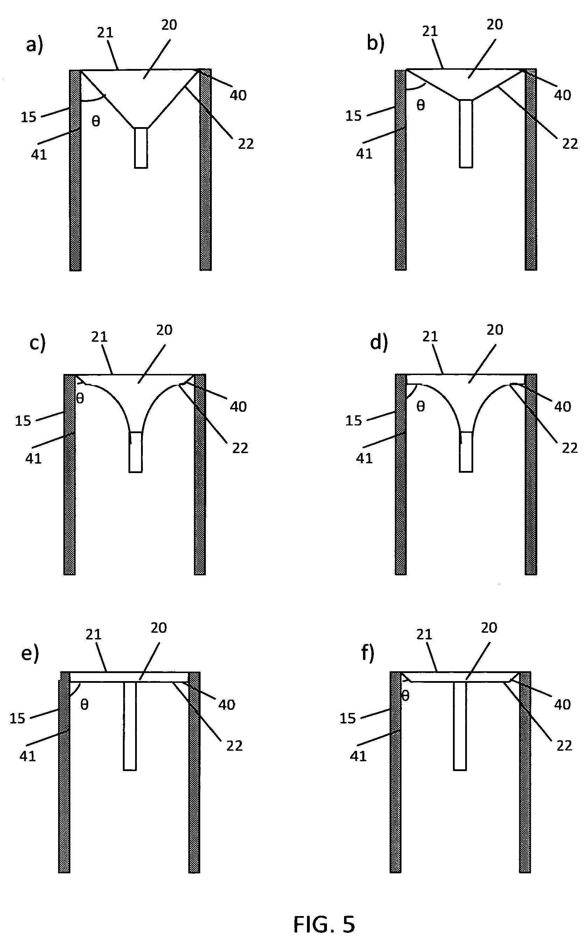

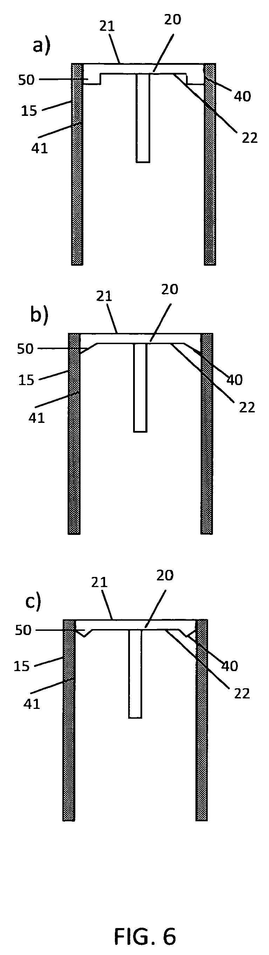

Where in embodiments of the present invention, reference is made to a peripheral area portion of a surface, reference is made to the area portion of the surface that is positioned furthest away from the center point of the surface. When for example cylindrical pipe portions are used (which is often the case, although embodiments of the present invention do not need to be limited thereto) the peripheral area portion of a surface facing the throughput opening of the pipe portion may be the portion of the surface facing the throughput opening of the pipe portion positioned within a distance R and R-dₑ from the central axis of the cylindrical pipe portion, with R being the radius of the pipe portion and dₑ being a predetermined distance from the edge of the surface.
In a first aspect, the present invention describes a device for assisting in filling a formwork with concrete. The device may especially be suitable for applications where the concrete is pumped under pressure into the formwork through pumping pipes located in the bottom area of the formwork. Examples are the concreting of walls or columns, which are preferably constructed by pumping self-compacting-concrete from the bottom of the formwork, although embodiments of the present invention are not limited hereto. The device comprises a pipe portion with a throughput opening for receiving concrete to be pumped into the formwork and fixing means for securing the pipe portion to the formwork. The pipe portion is configured for receiving concrete, for example from a pumping pipe connected to a concrete mixer, and extends through or connects with an opening in one of the side panels of the formwork. The device also comprises a valve for controlling flow of concrete passing through the pipe portion into the formwork. According to embodiments of the present invention, the flow of concrete passing through the pipe portion can be interrupted by means of the valve. The valve thereby comprises a closing body and a resilient means mechanically connected to the closing body. According to one set of embodiments of the present invention, the resilient means may be embedded in the closing body, whereas in another set of embodiments the resilient means and the closing body may be two physically separate entities. The resilient means is adapted for controlling a position of the closing body relative to the pipe portion. During pumping of the concrete, i.e. when an overpressure is generated between the pipe portion and the formwork, the resilient means positions the closing body with respect to the pipe portion so as to provide an opening between the closing body and the pipe portion. This results in an open state of the valve. When no overpressure of concrete from the pipe portion towards the formwork is present, the resilient means positions the closing body with respect to the pipe portion such that the concrete flow is interrupted, resulting in a closed state of the valve. According to embodiments of the present invention, the resilient means provides an automatic closing of the end opening of the pipe portion in absence of an overpressure in the pipe portion by means of a sealing surface of the closing body. It is an advantage of such embodiments that the valve automatically opens when the concreting operation starts, allowing concrete to flow into the formwork, and automatically closes when the pumping pipe is disconnected, obstructing concrete that was pumped into the formwork to flow back into the pipe portion. Further according to embodiments of the present invention, the closing body having a first surface facing the formwork and a second surface facing the throughput opening of the pipe portion, when the pipe portion is fixed to the formwork. The device is adapted, e.g. by the presence of the resilient means and the closing body, such that, when the valve is in closed state the first surface of the valve lies in plane with a wall of the formwork so as to provide a substantially flush surface of the concrete in the formwork. Substantially flush may be such that a height difference at a surface of the concrete is smaller than 1.5cm, advantageously smaller than 1cm, more advantageously 0.5cm or smaller. In the most advantageous embodiments a completely flush surface is obtained. As will be illustrated and discussed in more detail with respect to the particular examples below, the shape of the closing body may furthermore be optimized in order to minimally disturb the flow of concrete being poured into the formwork, for example by using a bell-shaped closing body. According to some embodiments of the present invention, the second surface of the closing body may comprise a peripheral area portion being closest to the inner wall of the pipe portion and wherein each angle between the peripheral area portion of the second surface and the inner wall of the pipe portion is at least 45°, e.g. between 45° and 180°, e.g. between 45° and 90°. Such profiling can assist in preventing aggregate particles from becoming jammed between the closing body and the inner wall of the pipe portion during the closing process of the valve. The orientation of the second surface may be provided in a peripheral area extending at least 5mm into the direction away from the inner wall, for example over at least 7mm, e.g. over at least 10mm, e.g. over at least 12mm. A larger peripheral area of the second surface that fulfills this condition may result in larger aggregates being prevented from blocking the valve. Alternatively or in addition thereto, the peripheral area also may comprise an edge feature extending in the direction towards the throughput opening of the pipe portion or in other words extending in a direction away from the formwork. Such an edge feature may for example be a ring shaped portion present at the edge of the second surface. The ring shaped portion may have a flat surface or an angled surface. The latter will be illustrated in examples described below.

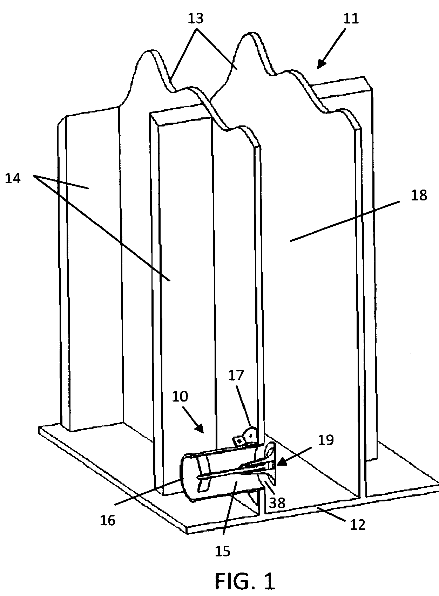

FIG. 1 is a cross-sectional 3D view of an example of an embodiment of the present invention, that can be used for illustrating the general idea of the present invention. A device 10 for assisting in filling formwork with concrete is connected to formwork 11, which in the present example is composed of a base slab 12, two parallel side panels 13 perpendicular to the base slab 12 and a plurality of support plates 14 for supporting the side panels 13. According to the example of FIG. 1, the opposite side panels 13 define a concrete receiving region 18 where a concrete element will be formed during the concreting process. The concrete element may be a concrete wall, a concrete column, a concrete beam, ... The device 10 comprises a pipe portion 15, shown in cross-section in FIG. 1, which is mounted parallel to the base plate 12 and extends through an opening 38 in one of the side panels 13. The device 10 is located at the bottom of the formwork 10 and has a pipe portion 15 with a distal end 16 with respect to the side panels 13. The distal end 16 of the pipe portion 15 may be connected to a further pumping pipe, not shown in the picture, through which concrete is pumped under pressure into the pipe portion 15. The pipe portion 15 of the device 10 is secured to the formwork 11 and is held in place by means of fixing means 17. Securing of the pipe portion 15 to the formwork 11 may for example be realized by providing a pipe clamp around the pipe portion 15, which can be bolted to the side panel 13. Alternatively, flanges may be fixed to the pipe portion 15 for providing connection with the formwork. The pipe portion can be mounted to the formwork in such a way that the outer surface of the valve is aligning with the inner surface of the formwork. Additionally, while the pipe portion 15 of the device 10 has been illustrated in FIG. 1 as being a cylindrical pipe portion, any other shape of pipe portion including a square shape or a triangular shape could be employed, as long as the pipe portion 15 allows for a continuous transport of the concrete between the pumping pipe and the formwork 11. A connection part may be provided between the further pumping pipe and the pipe portion 15 in order to be able to connect pipe elements with a different shape or diameter. Besides the pipe portion 15 and the fixing means 17, the device 10 furthermore comprises a closing body 19, arranged such that it provides an automatic closing of the opening 38 in the side panel 13 in absence of an overpressure in the pipe portion 15. The working of the closing body 19 will be explained in more detail below.

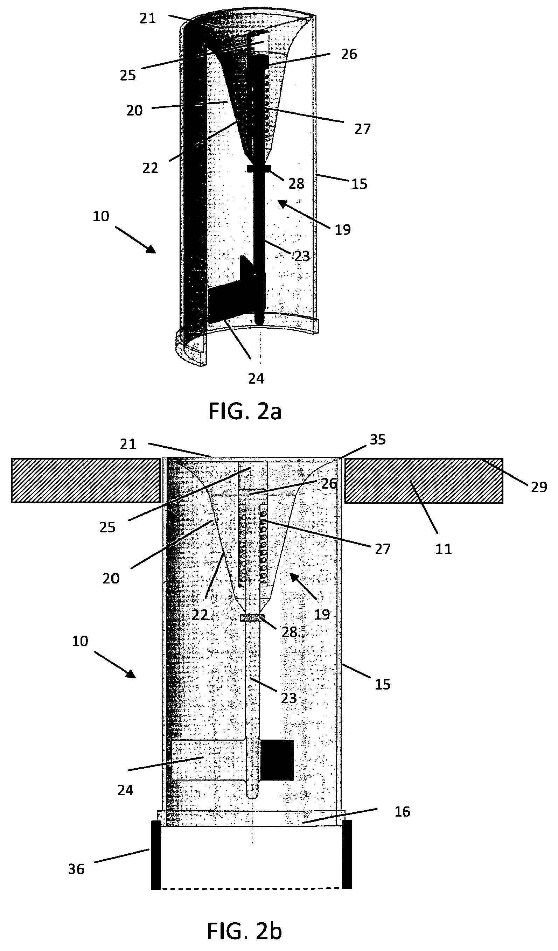

FIG. 2(a) shows a cross-sectional 3D view of a device 10 according to a first embodiment of the present invention. The cross-section is taken along a plane dividing the pipe portion 15 in the length into two equal parts. A 2D view of a device 10 according to a first embodiment of the present invention is illustrated in FIG. 2(b). For clarity of the figures, the fixing means 17 by which the pipe portion 15 is secured to the formwork 11 is not shown in both figures, whereas the formwork 11 is only illustrated in FIG. 2(b). The pipe portion 15 is inserted through or connected with an opening in the formwork 11 in such way that one end side 35 of the pipe portion 15 extends to the inner wall 29 of the formwork 11. The other end side 16 of the pipe portion 15 is then connected to a pumping pipe 36 for receiving concrete, as illustrated in FIG. 2(b). According to embodiments of the present invention, the device 10 comprises a closing body 20 and resilient means 27. The closing body 20 has a first surface 21 of which the shape and the dimensions are substantially equal to the shape and the dimensions of the transverse section of the pipe portion 15 so that the pipe portion 15 can be completely closed by the closing body 20. The first surface 21 is facing the inner portion of the formwork. The first surface typically is such that in closed state of the valve, the first surface21 is in line with the inner side of the formwork, such that upon filling of the formwork with concrete a substantially flat surface can be obtained. The closing body 20 furthermore comprises a second surface 22 facing the throughput section of the pipe portion 15. The second surface 22 may be symmetrically arranged around the central longitudinal axis of the pipe portion 15. A bar 23, having its longitudinal axis aligned with the central longitudinal axis of the pipe portion 15 may be enclosed by the closing body 20 and may be connected in a fixed way to the inner wall of the cylindrical pipe portion 15. In the example illustrated in FIG. 2(a) and FIG. 2(b), the distal end side of the bar 23 with respect to the first surface 21 has several cross-like fins 24 which are welded to the inner wall of the pipe portion 15 and are equally distributed in a cross-sectional plane of the pipe portion 15. The fins 24 assure a solid way of fixing the bar 23 to the inner wall of the cylindrical pipe portion 15, although any other means which obstruct movement of the bar 23 in the pipe portion 15 may be used instead. The other end side of the bar 23 may be retained in a void spacing 25 in the closing body 20 and may be terminated by a thickened portion 26. The dimensions and the shape of the transverse section of the void spacing 25 may be chosen such that they are substantially equal to the dimensions and the shape of the thickened portion 26 of the bar 23 so that the closing body 20 can slide along the bar 23. In one embodiment, for example, the bar 23 may be terminated by a cylindrical thickening 26, from which the diameter is substantially equal to the diameter of a cylindrical void spacing 25 in the closing body 20.
The device comprises resilient means for controlling the movement of the closing body with respect to the pipe portion. Such resilient means may be a compression coil spring, although embodiments are not limited thereto. In the present example, the resilient means, such as a compression coil spring 27, can be positioned in the void spacing 25 and encloses the bar 23. The thickened portion 26 of the bar 23 obstructs movement of the coil spring 27 towards the formwork 11. An edge 28, having an outer diameter slightly larger than the outer diameter of the bar 23, may be provided at a fixed position on the bar 23 so that motion of the closing body 20 towards the distal end of the pipe portion 15 with respect to the formwork 11 is limited. In the embodiment illustrated in FIG. 2(a) and FIG. 2(b), for example, the edge 28 is positioned in such way on the bar 23 that the coil spring 27 is slightly pre-stressed in the void spacing 25 and that the first surface 21 of the closing body 20 forms one plane with the inner wall 29 of the formwork 11 when no concreting operation is going on. When the concreting process starts, the concrete that is poured into the pipe portion 15 via the pumping pipe 36 will apply a force onto the closing body 20. For a sufficient high pressure of the concrete, the pre-stress in the compression coil spring 27 will be overcome, so that the spring is further compressed in the void spacing 25 and the closing body 20 slides along the bar 23 towards the inner part of the formwork 11. This is illustrated in FIG. 3. Hence, the end side 35 of the pipe portion 15 is no longer sealed by the valve 19, and the flow of concrete through the pipe portion 15 is introduced into the formwork 11. For this particular configuration, the valve 19 will be further referred as 'opened'. The direction of the flow of concrete is indicated with arrows 30 in FIG. 3. At the moment when the overpressure in the pipe portion 15 disappears, for example when the concreting process is terminated and the pumping pipe 36 is disconnected, the coil spring 27 will automatically rebound towards its pre-stressed state, applying thereby a force on the inner wall 31 of the closing body 20 as a consequence of which the closing body 20 slides back into the pipe portion 15. This closing operation is supported by the pressure of the concrete inside the formwork 11 and is terminated when the closing body 20 slides against the edge 28 of the bar 23. At that moment, the sealing surface 21 forms again one plane with the inner wall 29 of the formwork 11. For this particular configuration, the valve 19 will be further referred as 'closed', since the concrete pumped into the formwork 11 is obstructed from flowing back into the pipe portion 15. It is an advantage of the device 10 according to the present invention that the valve 19 automatically closes when the overpressure in the pipe portion 15 disappears so that no manual intervention is required after disconnection of the pumping pipe 36, except some cleaning of the inner side of the pipe portion 15. Moreover, after the concrete has hardened, the pipe portion 15 and the valve 19 can be easily disconnected from the formwork and both elements can be recuperated for further use.
In some embodiments of the present invention, the peripheral area of the surface 22 of the closing body 20 opposite to the first surface 21 forms an angle of at least 45° with the inner wall of the pipe portion 15. More particularly, in its peripheral area portion being closest to the inner wall of the pipe portion, each angle between the peripheral area portion of the second surface 22 and the inner wall of the pipe portion 15 is at least 45°. Advantageously all angles may be at least 60°, more advantageously at least 75°. The angle may be limited at the upper side to 90°, although in some embodiments the angle may be larger. The peripheral area portion may extend over at least 5 mm in the direction away from the inner wall. FIG. 4 is an enlarged view of the top right part of a system similar to FIG. 2(b), wherein the edge 40 of the surface 22 forms an angle θ of exactly 45° degrees with the inner wall 41 of the pipe portion 15. In FIG. 5, several simplified schematic views of alternative shapes of closing bodies 20 according to embodiments of the present invention are illustrated. In FIG. 5(a), the edge 40 of the surface 22 makes an angle θ of 45° with the inner wall 41 of the pipe portion 15. FIG. 5(b) illustrates an alternative embodiment according to the present invention wherein the edge 40 of the surface 22 forms an angle θ larger than 45°, i.e. about 60° with the inner wall 41 of the pipe portion 15. In both embodiments, the angle θ does not only determine the position of the peripheral area portion 40 of the surface 22 with respect to the inner wall 41, but characterizes the entire slope of the surface 22 of the closing body 20 with respect to the pipe portion 15. FIG. 5(c) illustrates a different embodiment according to the present invention, wherein the peripheral area portion 40 of the surface 22 makes an angle θ of 45° with the inner wall 41 over only a limited distance, for example over a distance of 5 mm, whereafter a different slope is used to construct the remaining part of the surface 22. FIG. 5(d) illustrates another embodiment according to the present invention, wherein the peripheral portion 40 of the surface 22 makes an angle θ of 90° with the inner wall 41 of the pipe portion 15 over only a limited distance. FIG. 5(e) shows a disk-shaped closing body 20 according to the present invention, wherein the surface 22 opposed to the sealing surface 21 forms an angle θ of 90° with the inner wall 41 of the pipe portion 15. FIG. 5(f) shows yet another alternative embodiment, wherein the peripheral portion 40 of the disk-shaped closing body 20 makes an angle θ of 45° with the inner wall 41 of the pipe portion 15.
The specific shape of the peripheral portion 40 of the second surface 22 of the closing body 20 assists in aggregate particles embedded in the concrete mixture being prevented from becoming jammed between the closing body 20 and the inner wall 41 of the pipe portion 15 during the closing process of the valve 19. For a sufficiently large angle θ between the inner wall 41 of the pipe portion 15 and the edge 40 of the closing body 20, aggregate particles located in the proximity of the opening 35 of the pipe portion 15 tend to be pulled along with the surface 22 of the closing body 20 into the pipe portion 15 when the valve 19 evolves from an opened to a closed configuration. Hence, this assists in stimulating that during the closing process, the motion of the closing body 20 is not obstructed and that the sealing surface 21 of the closing body 20 will lie exactly in the plane defined by the inner wall 29 of the formwork 11 when the closing process is terminated. Due to this reliable and efficient way of closing the pipe portion 15 after the concreting process, a flat concrete surface will remain when the formwork 11 is removed. Dependent on the size of the particles that are used in the concrete mixture, the distance over which the edge 40 of the closing body 20 is profiled, may be adapted. Generally, the larger the size of aggregate particles, the larger the distance over which the edge 40 should be profiled. For example, when the aggregate particles have a mean size between 10 and 15 mm, the closing body 20 may be configured such that the edge 40 of the closing body 20 forms an angle θ of at least 45° with the inner wall 41 of the pipe portion 15 over a distance of at least 10 mm. Alternatively or in addition to the above embodiments, in some embodiments the peripheral portion may comprise an edge feature extending towards the throughput opening of the pipe portion or in other words extending in a direction away from the formwork, when the device is in position. Different types of edge features may be used. In one embodiment, the edge feature may be an additional ring shaped portion present at the edge of the second surface. The latter is illustrated in FIG. 6. Such a ring shaped portion may have a flat surface, i.e. a surface parallel with the first surface of the closing body, as illustrated in FIG. 6 part a. In one example, such a ring may be between 2 and 10mm wide and may have a height of between 2mm and 10mm. The surface of the ring shaped portion thus may have a surface making an angle of 90° with respect to the inner wall of the pipe portion. Alternatively, the surface of the ring shaped portion may be inclined with respect to the first surface of the closing body. Examples thereof are shown in FIG. 6 part b and FIG. 6 part c. In FIG. 6 part b the surface of the ring shaped edge feature facing the opening of the pipe portion makes an angle of 135° with the inner wall of the pipe portion. In FIG. 6 part c, the surface of the ring shaped edge features comprises different facets being oriented in different directions. The edge feature may, similar to the other above described shaping of the peripheral area, result in assisting in aggregate particles embedded in the concrete mixture being prevented from becoming jammed between the closing body 20 and the inner wall 41 of the pipe portion 15 during the closing process of the valve 19. The latter may be obtained by aggregate particles located in the proximity of the opening 35 of the pipe portion 15 tending to be pulled along with the closing body 20 into the pipe portion 15 when the valve 19 evolves from an opened to a closed configuration. Hence, this also assists in stimulating that during the closing process, the motion of the closing body 20 is not obstructed and that the sealing surface 21 of the closing body 20 will lie exactly in the plane defined by the inner wall 29 of the formwork 11 when the closing process is terminated.
According to some embodiments of the present invention, the shape of the closing body 20 may be adapted and/or optimized to improve the filling efficiency of the device 10. The overall shape of the second surface 22 (which is positioned opposite to the sealing surface 21) may be such that it is adapted for guiding concrete in a fluent manner towards the opening between the closing body and the pipe portion 15, when the valve is in open state. The second surface may be concave. The second surface may have a conical shape or a bell shape, embodiments of the present invention not being limited thereto. Preferred embodiments are shown in FIG. 2(a), FIG. 2(b), FIG 3, FIG 5 (c) and FIG. 5(d), where the device 10 comprises a bell-shaped closing body 20, from which the diameter gradually decreases towards the distal end 16 of the pipe portion 15 with respect to the formwork 11. By using a bell-shaped closing body 20, concrete flowing from the pipe portion 15 into the formwork 11 is not disturbed significantly by the presence of the closing body 20 in the concrete receiving region 18 of the formwork 11. Moreover, the flow of concrete will be uniformly spread in all directions so that an optimal filling process is obtained.

While the invention has been illustrated and described in detail in the drawings and foregoing description, such illustration and description are to be considered illustrative or exemplary and not restrictive. The invention is not limited to the disclosed embodiments. For example, whereas in the embodiments described so far the valve 19 was supposed to be composed of a resilient means 27 embedded in a closing body 20, alternative embodiments can be thought of wherein the closing body and the resilient means are two physically separate entities. In one embodiment , the valve may comprise an extension coil spring, wherein one end side of the coil spring is glued to a disk-shaped closing body and the other end side of the coil spring is secured in a fixed way to the inner wall of the pipe portion. When the concreting operation starts, the coil spring will extend under the force exerted by the concrete on the closing body and the closing body will be pushed into the formwork, leaving an opening for the concrete to flow into the formwork. When the concreting operation is terminated, the coil spring will rebound to its unextended state and the opening in the formwork will be closed by means of the closing body.

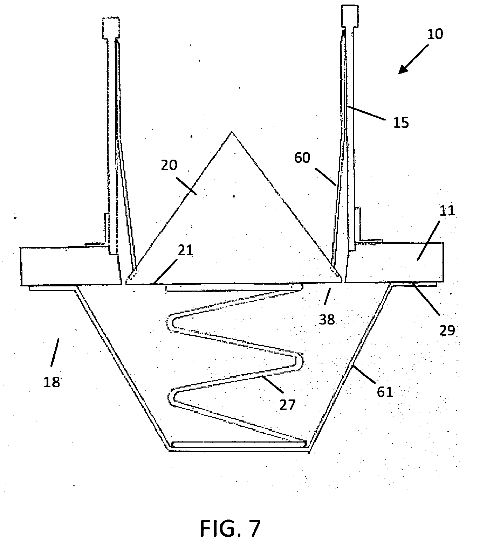

In FIG. 7, yet another alternative embodiment of a device 10 according to the present invention is illustrated, wherein the closing body 20 and the resilient means 27 are two physically separate entities and wherein the resilient means 27 is a compression coil spring located, after mounting of the device, in the concrete receiving region 18 of the formwork 11 instead of in the pipe portion 15. Fixing means 60 and 61, e.g. a frame to which the resilient means is connected, are provided which respectively secure the closing body 20 to the pipe portion 15 and the coil spring 27 to the inner wall 29 of the formwork 11, such that the coil spring 27 is slightly prestressed and the sealing surface 21 of the closing body 20 forms one plane with the inner wall of 29 of the formwork 11 when no concreting operation is going on. The operation of the device 10 as illustrated in FIG. 7 is similar to the working mechanism of the embodiments illustrated in FIGS. 2-6, and provides an efficient and reliable closing of the opening 38 in the formwork 11 when the pumping operation has finished. Since the fixing means 61 and the coil spring 27 remain in the concrete after pumping and hardening of the concrete, both elements may be fabricated from a non-metallic or non-corroding material such as stainless-steel in order to avoid corrosion induced damage to the concreted structure.

In one aspect, the present invention also relates to a method for controlled pumping of concrete into formwork. Such a method again is especially suitable when using self compacting concrete. The method comprising coupling a pipe portion to formwork to be filled with concrete, receiving concrete through said pipe portion and automatically opening a valve upon receipt of concrete in the pipe portion using overpressure of the concrete from the pipe portion towards the formwork, guiding the concrete through the valve into a concrete receiving region of the formwork, and automatically closing the valve when the concrete pumping process is terminated due to absence of overpressure of the concrete from the pipe portion towards the formwork. Automatically closing the valve thereby comprises moving the closing body relative with respect to the pipe portion to a closed state in which a surface of the closing body facing the formwork lies in plane with a wall of the formwork so as to provide a substantially flush surface of the concrete in the formwork.

The method may be especially suitable for use with a device as described in the first aspect, although embodiments are not limited thereto.

The method further may comprise steps expressing the functionality of one or more components of the device as described in the first aspect.

In some embodiments, automatically opening a valve may comprise moving a closing body relative with respect to a pipe portion so as to provide an opening between the closing body and the pipe portion.

In some embodiments, automatically closing the valve may comprise moving a closing body relative with respect to a pipe portion and preventing aggregates from blocking the closing of the valve by using a closing body having a first surface facing the formwork and a second surface facing the throughput opening of the pipe portion, wherein the second surface comprises a peripheral area portion being closest to the inner wall of the pipe portion wherein each angle between the peripheral area portion of the second surface and the inner wall of the pipe portion is at least 45° and/or wherein an extending edge feature is provided.

It is an advantage that a good flow and good filling of the formwork can be obtained using devices according to embodiments of the present invention.

It is an advantage of embodiments of the present invention that significant closing of the valve can be obtained automatically. In order to further assist herein, the method also may comprise applying a short pulse of reverse pumping, although this is not strictly required.

It is an advantage of embodiments of the present invention that releasing the pumping line can be easily performed.

It is an advantage of embodiments according to the present invention that the devices according to at least some embodiments of the present invention can be re-used.

It is an advantage of embodiments according to the present invention that the device can be used with different types of self compacting concrete.

Other variations to the disclosed embodiments can be understood and effected by those skilled in the art in practicing the claimed invention, from a study of the drawings, the disclosure and the appended claims.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A device (10) for assisting in filling a formwork (11) with concrete, the device (10) comprising a pipe portion (15) with a throughput opening for receiving concrete to be pumped into the formwork (11), fixing means (17) for securing the pipe portion (15) to the formwork (11) and a valve for controlling flow of concrete passing through the pipe portion (15) into the formwork (11), the valve (19) comprising a closing body (20) and a resilient means (27) mechanically connected to the closing body (20) and adapted for controlling a position of the closing body (20) relative to the pipe portion (15) so as to provide an opening between the closing body (20) and the pipe portion (15) during pumping of the concrete to provide an open state of the valve (19)and so as to position the closing body (20) in the pipe portion for interrupting the concrete flow upon absence of an overpressure of concrete from the pipe portion towards the formwork to provide a closed state of the valve (19), the closing body (20) having a first surface (21) facing the formwork (11) and a second surface (22) facing the throughput opening of the pipe portion (15),
**characterised in that**
the device (10) is adapted **in that**, when the valve (19) is in closed state the first surface of the valve (19) lies in plane with a wall (29) of the formwork so as to provide a substantially flush surface of the concrete in the formwork (11) and wherein the resilient means is at least partially and optionally fully shielded from concrete by the closing body or by a separate shielding such that the working of the resilient means is not disturbed by the concrete flow.

2. A device (10) according to claim 1, wherein the resilient means (27) is a spring.

3. A device (10) according to any of the previous claims, wherein the second surface of the closing body (20) is shaped for guiding concrete towards the opening between the pipe portion (15) and the closing body (20) when the valve (19) is in open state.

4. A device (10) according to claim 3, wherein the second surface (22) of the closing body (20) or part thereof has a concave shape, or has any of a substantially conical shape or bell shape.

5. A device (10) according to any of claims 1 to 4, wherein the closing body (20) has a cylindrical shape.

6. A device (10) according to any of the previous claims, wherein the resilient means (27) is positioned in the pipe portion (15).

7. A device (10) according to any of claims 1 to 5, wherein the resilient means (27) is located outside the pipe portion (15) and adapted for remaining in the concrete structure after it is hardened, and wherein optionally the resilient means (27) is fabricated from a non-metallic or non-corroding material in order to avoid corrosion induced damage to the concreted structure.

8. A device according to any of the previous claims, wherein the second surface (22) of the closing body comprises a peripheral area portion (40) being closest to an inner wall (41) of the pipe portion (15), each angle between the peripheral area portion of the second surface (22) and the inner wall (41) of the pipe portion being at least 45°.

9. A device (10) according to claim 8, wherein the peripheral area portion (40) of the second surface (22), facing the throughput opening of the pipe portion and making an angle θ of at least 45° with the inner wall (41) of the pipe portion (15), extends over at least 5mm in a direction away from the inner wall (41) of the pipe portion (15).

10. A device (10) according to any of the previous claims, wherein the second surface (22) of the closing body comprises a peripheral area portion (40) being closest to an inner wall (41) of the pipe portion (15), the peripheral area comprising an edge feature extending towards the throughput opening of the pipe portion.

11. A device (10) according to claim 10, wherein the edge feature is a ring shaped feature.

12. A method for controlled pumping of concrete into formwork (11) using a device according to any of claims 1 to 11 the method comprising
- coupling a pipe portion to formwork to be filled with concrete,
- receiving concrete through said pipe portion and automatically opening a valve (19) upon receipt of concrete in the pipe portion (15) using overpressure of the concrete from the pipe portion towards the formwork in order to move a closing body (20) relative with respect to the pipe portion and thus to provide an opening between the closing body (20) and the pipe portion (15),
- guiding the concrete through the valve (19) into a concrete receiving region (18) of the formwork (11), and
- automatically closing the valve (19) when the concrete pumping process is terminated due to absence of overpressure of the concrete from the pipe portion towards the formwork, wherein automatically closing the valve (19) comprises moving the closing body (20) relative with respect to the pipe portion (15) to a closed state;
**characterised in that**:
- in the closed state a surface (21) of the closing body (20) facing the formwork (11) lies in plane with a wall (29) of the formwork (11) so as to provide a substantially flush surface of the concrete in the formwork (11).

13. A method according to claim 12, wherein automatically opening a valve (19) comprises moving a closing body (20) relative with respect to the pipe portion (15) so as to provide an opening between the closing body (20) and the pipe portion (15) and/or wherein guiding the concrete to through the valve comprises guiding concrete towards the opening between the pipe portion (15) and the closing body (20) when the valve (19) is in open state using a surface of the closing body (20).

14. A method according to any of claims 12 to 13 , wherein automatically closing the valve (19) comprises moving a closing body (20) relative with respect to a pipe portion (15) and preventing aggregates from blocking the closing of the valve by using a closing body (20) having a first surface (21) facing the formwork (11) and a second surface (22) facing a throughput opening of the pipe portion (15), wherein the second surface (22) comprises a peripheral area portion (40) being closest to an inner wall (41) of the pipe portion (15) and wherein each angle between the peripheral area portion of the second surface (22) and the inner wall (41) of the pipe portion is at least 45°.

## Patentansprüche

1. Vorrichtung (10) zur Hilfe beim Füllen einer Schalung (11) mit Beton, wobei die Vorrichtung (10) einen Rohrabschnitt (15) mit einer Durchgangsöffnung zum Aufnehmen von Beton, der in die Schalung (11) gepumpt werden soll, Befestigungsmittel (17) zum Sichern des Rohrabschnitts (15) an der Schalung (11) und ein Ventil zum Regeln des Durchflusses des Betons umfasst, der durch den Rohrabschnitt (15) in die Schalung (11) durchläuft, wobei das Ventil (19) einen Schließkörper (20) und ein Federmittel (27) umfasst, das mechanisch mit dem Schließkörper (20) verbunden und angepasst ist, um eine Position des Schließkörpers (20) in Bezug auf den Rohrabschnitt (15) zu regeln, so dass eine Öffnung zwischen dem Schließkörper (20) und dem Rohrabschnitt (15) beim Pumpen des Betons bereitgestellt wird, um einen offenen Zustand des Ventils (19) bereitzustellen, und so dass der Schließkörper (20) im Rohrabschnitt angeordnet wird, um den Betondurchfluss nach Fehlen eines Überdrucks von Beton aus dem Rohrabschnitt Richtung Schalung zu unterbrechen, um einen geschlossenen Zustand des Ventils (19) bereitzustellen, wobei der Schließkörper (20) eine erste Oberfläche (21), die der Schalung (11) zugewandt ist, und eine zweite Oberfläche (22), die der Durchgangsöffnung des Rohrabschnitts (15) zugewandt ist, umfasst,
**dadurch gekennzeichnet, dass** die Vorrichtung (10) angepasst ist, dass, wenn sich das Ventil (19) im geschlossenen Zustand befindet, die erste Oberfläche des Ventils (19) in einer Ebene mit einer Wand (29) der Schalung liegt, so dass eine im Wesentlichen bündige Oberfläche des Betons in der Schalung (11) bereitgestellt wird, und wobei das Federmittel wenigstens teilweise und optional vollständig vom Beton durch den Schließkörper oder durch eine separate Abschirmung abgeschirmt ist, so dass das Arbeiten des Federmittels durch den Betondurchfluss nicht gestört wird.

2. Vorrichtung (10) nach Anspruch 1, wobei das Federmittel (27) eine Feder ist.

3. Vorrichtung (10) nach einem der vorhergehenden Ansprüche, wobei die zweite Oberfläche des Schließkörpers (20) zum Leiten von Beton Richtung Öffnung zwischen dem Rohrabschnitt (15) und dem Schließkörper (20) geformt ist, wenn sich das Ventil (19) im offenen Zustand befindet.

4. Vorrichtung (10) nach Anspruch 3, wobei die zweite Oberfläche (22) des Schließkörpers (20) oder ein Teil davon eine konkave Form aufweist oder eine einer im Wesentlichen konischen oder glockenförmigen Form aufweist.

5. Vorrichtung (10) nach einem der Ansprüche 1 bis 4, wobei der Schließkörper (20) eine zylindrische Form aufweist.

6. Vorrichtung (10) nach einem der vorhergehenden Ansprüche, wobei das Federmittel (27) im Rohrabschnitt (15) angeordnet ist.

7. Vorrichtung (10) nach einem der Ansprüche 1 bis 5, wobei das Federmittel (27) außerhalb des Rohrabschnitts (15) angeordnet und angepasst ist, um in der Betonstruktur nach deren Aushärtung zu verbleiben, und wobei optional das Federmittel (27) aus einem nichtmetallischen oder korrosionsbeständigen Material hergestellt ist, um korrosionsbedingte Schäden an der betonierten Struktur zu vermeiden.

8. Vorrichtung nach einem der vorhergehenden Ansprüche, wobei die zweite Oberfläche (22) des Schließkörpers einen umlaufenden Flächenabschnitt (40) umfasst, der einer Innenwand (41) des Rohrabschnitts (15) am nächsten liegt, wobei jeder Winkel zwischen dem umlaufenden Flächenabschnitt der zweiten Oberfläche (22) und der Innenwand (41) des Rohrabschnitts wenigstens 45° beträgt.

9. Vorrichtung (10) nach Anspruch 8, wobei sich der umlaufende Flächenabschnitt (40) der zweiten Oberfläche (22), der der Durchgangsöffnung des Rohrabschnitts zugewandt ist und einen Winkel θ von wenigstens 45° mit der Innenwand (41) des Rohrabschnitts (15) bildet, über wenigstens 5 mm in eine Richtung weg von der Innenwand (41) des Rohrabschnitts (15) erstreckt.

10. Vorrichtung (10) nach einem der vorhergehenden Ansprüche, wobei die zweite Oberfläche (22) des Schließkörpers einen umlaufenden Flächenabschnitt (40) umfasst, der einer Innenwand (41) des Rohrabschnitts (15) am nächsten liegt, wobei die umlaufende Fläche ein Kantenmerkmal umfasst, das sich Richtung Durchgangsöffnung des Rohrabschnitts erstreckt.

11. Vorrichtung (10) nach Anspruch 10, wobei das Kantenmerkmal ein ringförmiges Merkmal ist.

12. Verfahren zum geregelten Pumpen von Beton in eine Schalung (11) unter Verwendung einer Vorrichtung nach einem der Ansprüche 1 bis 11, wobei das Verfahren Folgendes umfasst :
- Koppeln eines Rohrabschnitts an die Schalung, die mit Beton gefüllt werden soll,
- Aufnehmen von Beton durch den Rohrabschnitt und automatisches Öffnen eines Ventils (19) nach Aufnahme von Beton im Rohrabschnitt (15) unter Verwendung von Überdruck des Betons aus dem Rohrabschnitt Richtung Schalung, um einen Schließkörper (20) in Bezug auf den Rohrabschnitt zu bewegen und folglich eine Öffnung zwischen dem Schließkörper (20) und dem Rohrabschnitt (15) bereitzustellen,
- Leiten des Betons durch das Ventil (19) in einen Beton aufnehmenden Bereich (18) der Schalung (11), und
- automatisches Schließen des Ventils (19), wenn der Betonpumpprozess aufgrund des Fehlens von Überdruck des Betons aus dem Rohrabschnitt Richtung Schalung abgeschlossen ist, wobei das automatische Schließen des Ventils (19) das Bewegen des Schließkörpers (20) in Bezug auf den Rohrabschnitt (15) in einen geschlossenen Zustand umfasst;
**dadurch gekennzeichnet, dass**:
- im geschlossenen Zustand eine Oberfläche (21) des Schließkörpers (20), die der Schalung (11) zugewandt ist, in einer Ebene mit einer Wand (29) der Schalung (11) liegt, so dass eine im Wesentlichen bündige Oberfläche des Betons in der Schalung (11) bereitgestellt wird.

13. Verfahren nach Anspruch 12, wobei das automatische Öffnen des Ventils (19) das Bewegen eines Schließkörpers (20) in Bezug auf den Rohrabschnitt (15) umfasst, so dass eine Öffnung zwischen dem Schließkörper (20) und dem Rohrabschnitt (15) bereitgestellt wird, und/oder wobei das Leiten des Betons durch das Ventil das Leiten von Beton Richtung Öffnung zwischen dem Rohrabschnitt (15) und dem Schließkörper (20) umfasst, wenn sich das Ventil (19) im offenen Zustand befindet, unter Verwendung einer Oberfläche des Schließkörpers (20).

14. Verfahren nach einem der Ansprüche 12 bis 13, wobei das automatische Schließen des Ventils (19) das Bewegen eines Schließkörpers (20) in Bezug auf einen Rohrabschnitt (15) und das Vermeiden, dass Zuschlagstoffe das Schließen des Ventils blockieren, umfasst, durch Verwenden eines Schließkörpers (20) mit einer ersten Oberfläche (21), die der Schalung (11) zugewandt ist, und einer zweiten Oberfläche (22), die einer Durchgangsöffnung des Rohrabschnitts (15) zugewandt ist, wobei die zweite Oberfläche (22) einen umlaufenden Flächenabschnitt (40) umfasst, der einer Innenwand (41) des Rohrabschnitts (15) am nächsten liegt, und wobei jeder Winkel zwischen dem umlaufenden Flächenabschnitt der zweiten Oberfläche (22) und der Innenwand (41) des Rohrabschnitts wenigstens 45° beträgt.

## Revendications

1. Un dispositif (10) d'aide au remplissage d'un coffrage (11) avec du béton, le dispositif (10) comprenant une partie tuyau (15) avec une ouverture de flux destinée à la réception de béton à pomper dans le coffrage (11), un moyen de fixation (17) destiné à fixer la partie tuyau (15) au coffrage (11) et une soupape destinée à la commande de l'écoulement de béton passant au travers de la partie tuyau (15) dans le coffrage (11), la soupape (19) comprenant un corps de fermeture (20) et un moyen élastique (27) mécaniquement raccordé au corps de fermeture (20) et adapté de façon à commander une position du corps de fermeture (20) par rapport à la partie tuyau (15) de façon à fournir une ouverture entre le corps de fermeture (20) et la partie tuyau (15) au cours du pompage du béton de façon à fournir un état ouvert de la soupape (19) et à positionner le corps de fermeture (20) dans la partie tuyau de façon à interrompre l'écoulement de béton en cas d'absence d'une surpression de béton de la partie tuyau vers le coffrage de façon à fournir un état fermé de la soupape (19), le corps de fermeture (20) possédant une première surface (21) faisant face au coffrage (11) et une deuxième surface (22) faisant face à l'ouverture de flux de la partie tuyau (15),
**caractérisé en ce que**
le dispositif (10) est adapté **en ce que**, lorsque la soupape (19) est dans l'état fermé, la première surface de la soupape (19) se situe dans un plan avec une paroi (29) du coffrage de façon à fournir une surface sensiblement à fleur du béton dans le coffrage (11), et où le moyen élastique est au moins partiellement et éventuellement totalement protégé du béton par le corps de fermeture ou par un blindage distinct de sorte que le fonctionnement du moyen élastique ne soit pas perturbé par l'écoulement de béton.

2. Un dispositif (10) selon la Revendication 1, où le moyen élastique (27) est un ressort.

3. Un dispositif (10) selon l'une quelconque des Revendications précédentes, où la deuxième surface du corps de fermeture (20) est façonnée de façon à guider le béton vers l'ouverture entre la partie tuyau (15) et le corps de fermeture (20) lorsque la soupape (19) est dans l'état ouvert.

4. Un dispositif (10) selon la Revendication 3, où la deuxième surface (22) du corps de fermeture (20) ou une partie de celle-ci possède une forme concave ou possède une forme parmi une forme sensiblement conique ou une forme en cloche.

5. Un dispositif (10) selon l'une quelconque des Revendications 1 à 4, où le corps de fermeture (20) possède une forme cylindrique.

6. Un dispositif (10) selon l'une quelconque des Revendications précédentes, où le moyen élastique (27) est positionné dans la partie tuyau (15).

7. Un dispositif (10) selon l'une quelconque des Revendications 1 à 5, où le moyen élastique (27) est placé à l'extérieur de la partie tuyau (15) et adapté de façon à demeurer dans la structure en béton après qu'elle se soit durci, et où éventuellement le moyen élastique (27) est fabriqué à partir d'un matériau non métallique ou non corrosif de façon à éviter tout dommage induit par la corrosion à la structure en béton.

8. Un dispositif selon l'une quelconque des Revendications précédentes, où la deuxième surface (22) du corps de fermeture comprend une partie zone périphérique (40) qui est la plus proche d'une paroi intérieure (41) de la partie tuyau (15), chaque angle entre la partie zone périphérique de la deuxième surface (22) et la paroi intérieure (41) de la partie tuyau étant au moins de 45°.

9. Un dispositif (10) selon la Revendication 8, où la partie zone périphérique (40) de la deuxième surface (22), faisant face à l'ouverture de flux de la partie tuyau et faisant un angle θ d'au moins 45° avec la paroi intérieure (41) de la partie tuyau (15), s'étend sur au moins 5 mm dans une direction à l'écart de la paroi intérieure (41) de la partie tuyau (15).

10. Un dispositif (10) selon l'une quelconque des Revendications précédentes, où la deuxième surface (22) du corps de fermeture comprend une partie zone périphérique (40) qui est la plus proche d'une paroi intérieure (41) de la partie tuyau (15), la zone périphérique comprenant une caractéristique de bordure s'étendant vers l'ouverture de flux de la partie tuyau.

11. Un dispositif (10) selon la Revendication 10, où la caractéristique de bordure est une caractéristique en forme d'anneau.

12. Un procédé de commande du pompage de béton dans un coffrage (11) au moyen d'un dispositif selon l'une quelconque des Revendications 1 à 11, le procédé comprenant :
- le couplage d'une partie tuyau à un coffrage à remplir avec du béton,
- la réception de béton au travers de ladite partie tuyau et l'ouverture automatique d'une soupape (19) après réception du béton dans la partie tuyau (15) au moyen d'une surpression du béton provenant de la partie tuyau vers le coffrage de façon à déplacer un corps de fermeture (20) par rapport à la partie tuyau et ainsi fournir une ouverture entre le corps de fermeture (20) et la partie tuyau (15),
- le guidage du béton au travers de la soupape (19) dans une zone de réception de béton (18) du coffrage (11), et
- la fermeture automatique de la soupape (19) lorsque le procédé de pompage du béton est terminé du fait de l'absence d'une surpression du béton de la partie tuyau vers le coffrage, où la fermeture automatique de la soupape (19) comprend le déplacement du corps de fermeture (20) par rapport à la partie tuyau (15) vers un état fermé,
**caractérisé en ce que** :
- dans l'état fermé, une surface (21) du corps de fermeture (20) faisant face au coffrage (11) se situe dans un plan avec une paroi (29) du coffrage (11) de façon à fournir une surface sensiblement à fleur du béton dans le coffrage (11).

13. Un procédé selon la Revendication 12, où l'ouverture automatique d'une soupape (19) comprend le déplacement d'un corps de fermeture (20) par rapport à la partie tuyau (15) de façon à fournir une ouverture entre le corps de fermeture (20) et la partie tuyau (15) et/ou où le guidage du béton au travers de la soupape comprend le guidage de béton vers l'ouverture entre la partie tuyau (15) et le corps de fermeture (20) lorsque la soupape (19) est dans l'état ouvert au moyen d'une surface du corps de fermeture (20).

14. Un procédé selon l'une quelconque des Revendications 12 à 13, où la fermeture automatique de la soupape (19) comprend le déplacement d'un corps de fermeture (20) par rapport à une partie tuyau (15) et l'empêchement des agrégats de bloquer la fermeture de la soupape par l'utilisation d'un corps de fermeture (20) possédant une première surface (21) faisant face au coffrage (11) et une deuxième surface (22) faisant face à une ouverture de flux de la partie tuyau (15), où la deuxième surface (22) comprend une partie zone périphérique (40) qui est la plus proche d'une paroi intérieure (41) de la partie tuyau (15) et où chaque angle entre la partie zone périphérique de la deuxième surface (22) et la paroi intérieure (41) de la partie tuyau est au moins de 45°.
